(19) Europäisches Patentamt / European Patent Office / Office européen des brevets

(11) **EP 4 243 121 A1**

(12) **EUROPEAN PATENT APPLICATION**
published in accordance with Art. 153(4) EPC

(43) Date of publication:
**13.09.2023 Bulletin 2023/37**

(21) Application number: **21911186.1**

(22) Date of filing: **30.08.2021**

(51) International Patent Classification (IPC):
**H01M 4/525** (2010.01)  **H01M 4/505** (2010.01)
**H01M 10/54** (2006.01)  **H01M 4/36** (2006.01)
**H01M 4/62** (2006.01)  **C01G 53/00** (2006.01)
**H01M 10/052** (2010.01)

(52) Cooperative Patent Classification (CPC):
**C01G 53/00; H01M 4/36; H01M 4/505;**
**H01M 4/525; H01M 4/62; H01M 10/052;**
**H01M 10/54**

(86) International application number:
**PCT/KR2021/011582**

(87) International publication number:
**WO 2022/139116 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.12.2020 KR 20200183671**

(71) Applicant: **ECOPRO BM CO., LTD.**
**Cheongju-si, Chungcheongbuk-do 28116 (KR)**

(72) Inventors:
• **PAKR, Jong Hwan**
  **Cheongju-si Chungcheongbuk-do 28116 (KR)**
• **CHOI, Moon Ho**
  **Cheongju-si Chungcheongbuk-do 28116 (KR)**
• **PARK, Jong Seok**
  **Cheongju-si Chungcheongbuk-do 28116 (KR)**
• **PARK, Jong Hwan**
  **Cheongju-si Chungcheongbuk-do 28116 (KR)**

(74) Representative: **BCKIP Part mbB**
**Siegfriedstraße 8**
**80803 München (DE)**

(54) **METHOD FOR MANUFACTURING POSITIVE ELECTRODE ACTIVE MATERIAL FOR LITHIUM SECONDARY BATTERY USING WASTE-POSITIVE ELECTRODE ACTIVE MATERIAL**

(57) The present invention relates to a method of preparing a positive electrode active material for a lithium secondary battery using a waste positive electrode active material, and more particularly, to a method of preparing a positive electrode active material for a lithium secondary battery using a waste positive electrode active material, which can improve electrochemical properties and stability by controlling the specific surface area of the waste positive electrode active material.

FIG. 1

EP 4 243 121 A1

# EP 4 243 121 A1

**Description**

BACKGROUND

**1. Field of the Invention**

The present invention relates to a method of preparing a positive electrode active material for a lithium secondary battery using a waste positive electrode active material, and more particularly, to a method of preparing a positive electrode active material for a lithium secondary battery using a waste positive electrode active material, which can improve electrochemical properties and stability by controlling the specific surface area of the waste positive electrode active material.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic liquid electrolyte or a polymer electrolyte solution between the positive electrode and the negative electrode.

As a positive electrode active material for a lithium secondary battery, a lithium composite oxide is used. For example, composite oxides such as $LiCoO_2$, $LiMn_2O_4$, $LiNiO_2$, and $LiMnO_2$ have been studied, and recently, oxides with a composition in which some of the nickel element in the lithium composite oxide is substituted with a metal such as Co, Mn and/or Al have been suggested. Particularly, a ternary lithium composite oxide including all of Ni, Co and Mn, or Ni, Co and Al is typically used in large-capacity lithium secondary batteries for electric vehicles. In addition, there has been an attempt to improve the electrochemical properties and stability of a positive electrode active material by doping an additional element into the ternary lithium composite oxide.

With the development of technology, the demand for lithium secondary batteries, including electric vehicles, is rapidly increasing, and the demand for cost reduction of lithium secondary batteries and various materials used in lithium secondary batteries is also increasing in related industries.

For example, to synthesize a precursor of a conventional lithium composite oxide including three or more elements, generally, a co-precipitation method is used. The co-precipitation method generates a large amount of wastewater and requires complicated process steps, so it is pointed out as the cause of not only environmental pollution but also increasing the manufacturing costs of a positive electrode active material.

Accordingly, in recent years, research has been conducted to lower the manufacturing costs of a positive electrode active material by reusing a waste positive electrode active material recovered from an end-of-life lithium secondary battery.

SUMMARY OF THE INVENTION

In the lithium secondary battery market, the growth of lithium secondary batteries for electric vehicles is driving the market, and accordingly, the demand for positive electrode active materials used in lithium secondary batteries is also continuously changing, and particularly, the demand for reducing the costs of a positive electrode active material is also increasing.

To meet such market needs, the present invention is directed to providing a method of preparing a positive electrode active material for a lithium secondary battery using a precursor derived from a waste positive electrode active material during the preparation of a positive electrode active material.

Particularly, the present invention is directed to providing a method of preparing a positive electrode active material for a lithium secondary battery which can exhibit levels of electrochemical properties and stability similar to those of a conventional positive electrode active material prepared using a precursor synthesized by a co-precipitation method, despite the use of a waste positive electrode active material-derived precursor.

As such, the present invention is directed to providing a method of preparing a positive electrode active material for a lithium secondary battery by reusing a waste positive electrode active material separated from an end-of-life lithium secondary battery or a defective lithium secondary battery obtained in a manufacturing process as a raw material for new one during the preparation of a positive electrode active material that accounts for a high proportion of manufacturing costs, thereby capable of contributing to the reduction in costs of a positive electrode active material and a lithium secondary battery.

In addition, the present invention is directed to providing a positive electrode including the positive electrode active material prepared by the preparation method described herein.

Moreover, the present invention is directed to providing a lithium secondary battery using the positive electrode described herein.

One aspect of the present invention provides a method of preparing a positive electrode active material for a lithium secondary battery, which includes: (a) preparing a slurry by mixing a waste positive electrode active material and a solvent, (b) grinding the waste positive electrode active material in the slurry, (c) preparing a precursor by spray-drying the slurry in which the waste positive electrode active material is ground, and (d) obtaining a lithium composite oxide by thermally treating the precursor.

The waste positive electrode active material used in (a) may include a lithium composite oxide represented by Formula 1 or 2 below:

$$[\text{Formula 1}] \qquad Li_wNi_{1-x}M_xC_{2-y}X_y$$

(Here,

M is at least one selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu,
X is selected from F, S and P,
$0.5 < w < 1.5$, $0 \le x \le 0.80$, and $0 \le y \le 2$.)

$$[\text{Formula 2}] \qquad Li_wNi_{1-(x+y+z)}Co_xM1_yM2_zO_2$$

(Here,

M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
$0.5 < w < 1.5$, $0 \le x \le 0.40$, $0 \le y \le 0.40$, and $0 \le z \le 0.40$.)

In addition, the preparation method according to the present invention may further include (e) preparing a mixture by mixing at least one selected from at least one sub-raw material selected from Mn, Co, Al, B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd and Cu and a lithium-containing raw material with the lithium composite oxide obtained in (b) and then thermally treating the mixture.

Through the thermal treatment in (e), an oxide represented by Formula 3 below may be generated on at least a part of the surface of the lithium composite oxide.

$$[\text{Formula 3}] \qquad Li_aA_bO_c$$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd and Nd,
$0 \le a \le 10$, $0 \le b \le 8$, and $2 \le c \le 13$.)

Another aspect of the present invention provides a positive electrode active material for a lithium secondary battery having a lithium composite oxide which contains (1) at least one selected from manganese and aluminum; (2) nickel; and (3) cobalt, wherein 3 wt% or more of the (1) at least one selected from manganese and aluminum, (2) nickel, and (3) cobalt in the lithium composite oxide with respect to the total weight of the positive electrode active material is derived from a waste positive electrode active material.

The positive electrode active material may be a positive electrode active material prepared by the preparation method according to one aspect of the present invention.

The lithium composite oxide may be represented by Formula 1 or 2 below:

$$[\text{Formula 1}] \qquad Li_wNi_{1-x}M_xC_{2-y}X_y$$

(Here,

M is at least one selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu,

X is selected from F, S and P,

$0.5 < w < 1.5$, $0 \leq x \leq 0.80$, and $0 \leq y \leq 2$.)

$$[\text{Formula 2}] \qquad Li_w Ni_{1-(x+y+z)} Co_x M1_y M2_z O_2$$

(Here,

M1 is at least one selected from Mn and Al,

M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,

M1 and M2 are different elements,

$0.5 < w < 1.5$, $0 \leq x \leq 0.40$, $0 \leq y \leq 0.40$, and $0 \leq z \leq 0.40$.)

In addition, a coating layer including an oxide represented by Formula 3 below may be present on at least a part of the lithium composite oxide.

$$[\text{Formula 3}] \qquad Li_a A_b O_c$$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd and Nd,

$0 \leq a \leq 10$, $0 < b \leq 8$, and $2 \leq c \leq 13$.)

According to the present invention, a positive electrode active material exhibiting similar levels of electrochemical properties and stability to a conventional positive electrode active material prepared using a precursor synthesized by a co-precipitation method can be prepared using a waste positive electrode active material-derived precursor.

Accordingly, in the manufacture of a positive electrode active material that accounts for a high proportion of manufacturing costs, as a waste positive electrode active material separated from an end-of-life lithium secondary battery or a defective lithium secondary battery obtained in a manufacturing process can be reused as a raw material for new one, it can contribute to the overall reduction in costs of a positive electrode active material and a lithium secondary battery.

In addition, instead of disposal, reusing an end-of-life lithium secondary battery or a defective lithium secondary battery obtained in a manufacturing process can reduce problems such as resource waste and environmental pollution.

BRIEF DESCRIPTION OF THE DRAWINGS

FIG. 1 is a cross-sectional SEM image of a precursor obtained during the preparation of a positive electrode active material according to Example 1 of the present invention.

FIG. 2 is a cross-sectional SEM image of a precursor obtained during preparation of a positive electrode active material according to Example 3 of the present invention.

FIG. 3 is a cross-sectional SEM image of a precursor obtained during preparation of a positive electrode active material according to Comparative Example 3 of the present invention.

FIG. 4 is a cross-sectional SEM image of a precursor obtained during preparation of a positive electrode active material according to Comparative Example 4 of the present invention.

DETAILED DESCRIPTION OF EXEMPLARY EMBODIMENTS

To better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a method of preparing a positive electrode active material for a lithium secondary battery using a waste positive electrode active material according to the present invention, a positive electrode including the positive electrode active material prepared by the method, and a lithium secondary battery using the positive electrode will be described in further detail.

Method of preparing positive electrode active material for a lithium secondary battery using waste positive electrode active material

According to the aspect of the present invention, a method of preparing a positive electrode active material for a lithium secondary battery using a waste positive electrode active material, which includes (a) preparing a slurry by mixing a waste positive electrode active material and a solvent, (b) grinding the waste positive electrode active material in the slurry, (c) preparing a precursor by spray-drying the slurry in which the waste positive electrode active material is ground, and (d) obtaining a lithium composite oxide by thermally treating the precursor, is provided.

The waste positive electrode active material used in (a) is used as a raw material for a positive electrode active material for a lithium secondary battery according to one aspect of the present invention.

The waste positive electrode active material may be recovered from an end-of-life or defective lithium secondary battery (hereinafter, a waste lithium secondary battery) or positive electrode, which is inoperable, but the present invention is not limited thereto.

For example, to prepare a positive electrode active material with the NCM811 composition according to the preparation method described herein, an excess of a positive electrode active material with the NCM622 composition may be used. Here, even if the excess of the positive electrode active material with the NCM622 composition has not reached the end of its lifetime or is not defective, it may be referred to herein as a waste positive electrode active material for convenience.

Accordingly, all of various lithium composite oxides, which are used as raw materials in (a) of the preparation method described herein, and positive electrode active materials including the same will be referred to as waste positive electrode active materials.

The waste positive electrode active material used in (a) may include a lithium composite oxide represented by Formula 1 or 2.

$$[\text{Formula 1}] \qquad Li_wNi_{1-x}M_xC_{2-y}X_y$$

(Here,

M is at least one selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu,
X is selected from F, S and P,
$0.5<w<1.5$, $0\leq x\leq0.80$, and $0\leq y\leq2$.)

$$[\text{Formula 2}] \qquad Li_wNi_{1-(x+y+z)}Co_xM1_yM2_zO_2$$

(Here,

M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
$0.5<w<1.5$, $0\leq x\leq0.40$, $0<y\leq0.40$, and $0\leq z\leq0.40$.)

The waste positive electrode active material used in (a) may be appropriately selected according to the composition of a positive electrode active material targeted in the preparation method described herein. However, when elements constituting a lithium composite oxide included in the waste positive electrode active material are different from elements constituting a lithium composite oxide included in the positive electrode active material targeted in the preparation method described herein, the elements that constitute the lithium composite oxide included in the waste positive electrode active material may serve as impurities, and therefore, the elements constituting the lithium composite oxide included in the positive electrode active material targeted in the preparation method described herein preferably include at least an element that constitutes the lithium composite oxide included in the waste positive electrode active material.

For example, when the positive electrode active material targeted in the preparation method described herein has the NCM811 composition, as the lithium composite oxide included in the waste positive electrode active material, lithium composite oxide(s) with a composition such as a lithium nickel-based oxide (LNO), a lithium cobalt-based oxide (LCO) and/or a lithium manganese-based oxide (LMO), or a binary lithium composite oxide not having an NCM811 composition or ternary lithium composite oxide(s) with an NCM424 and/or NCM622 may be used.

In addition, the waste positive electrode active material used in (a) may be composed of a lithium composite oxide with the same composition, but the present invention is not limited thereto. The waste positive electrode active material used in (a) may be provided as a mixture including lithium composite oxides with different compositions.

Meanwhile, the waste positive electrode active material used in (a) may be recovered from a positive electrode of an inoperable, waste lithium secondary battery, which has reached the end of its lifetime or is defective. For example, the waste positive electrode active material present as a positive electrode active material layer in the positive electrode may be obtained by separating the positive electrode active material layer from the positive electrode (or a positive electrode current collector used in the positive electrode) and then grinding the separated positive electrode active material layer.

In another case, as the waste positive electrode active material, an excess of the positive electrode active material that is not processed as a positive electrode or lithium secondary battery may also be used.

The selected waste positive electrode active material is mixed with a solvent and thus prepared in the form of a slurry.

The solvent is not particularly limited and may be any solvent that can create an environment in which a subsequent process can be performed without causing an excessive chemical reaction with the waste positive electrode active material. For example, as the solvent, deionized water, distilled water, an alcohol (ethyl alcohol or isopropyl alcohol), acetone, an acid solution, an alkaline solution or an arbitrary mixture thereof may be used.

The amount of solvent used to prepare the slurry is not particularly limited but is preferably adjusted so that the slurry has a viscosity of 3,000 to 20,000 cp without degrading the grinding efficiency of the waste positive electrode active material of the slurry in (b), which will be described below.

In addition, during the preparation of the slurry, at least one sub-raw material including an element selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu may be further added.

By adding the sub-raw material to the slurry before grinding the waste positive electrode active material of the slurry, in the subsequent step (b), an element included in the sub-raw material in a particle formed by grinding the waste positive electrode active material may be doped or the sub-raw material and/or a metal element included therein may be attached to the surface of the particle.

In addition, as the sub-raw material is added to the slurry before grinding the waste positive electrode active material in the slurry, it is possible to obtain a precursor for a positive electrode active material without using a co-precipitation method, which has been used to synthesize a conventional precursor. Moreover, when the sub-raw material is added to the slurry after grinding the waste positive electrode active material, an additional grinding process has to be performed to dope an element included in the sub-raw material in a particle formed by grinding the waste positive electrode active material or attach the sub-raw material and/or a metal element included therein to the surface of the particle. For this reason, adding the sub-raw material to the slurry before grinding the waste positive electrode active material can improve process efficiency.

Here, the sub-raw material may be provided as at least one type selected from a sulfate, a carbonate, a nitrate, an acetate, a chloride, a hydroxide, and an oxide.

For example, when the waste positive electrode active material has the NCM424 composition, and the positive electrode active material targeted in the preparation method described herein has the NCM811 composition, in the preparation of the slurry, (1) a nickel-containing sub-raw material (e.g., a nickel-containing hydroxide), (2) a cobalt-containing sub-raw material (e.g., a cobalt-containing hydroxide), and/or (3) a manganese-containing sub-raw material (e.g., manganese-containing hydroxide) may be further added.

The amount of at least one sub-raw material further added to the slurry may vary according to the composition of the waste positive electrode active material used in (a) and the composition of a positive electrode active material targeted in the preparation method described herein.

In addition, in the preparation of the slurry, a binder may be further added. The input amount of the binder may vary according to the content of raw materials (the waste positive electrode active material and the sub-raw material) in the slurry and the molecular weight of the binder, but the binder is preferably added in an amount of 1% or less with respect to the total weight of the raw materials (the waste positive electrode active material and the sub-raw material) in the slurry.

The binder may serve as a binder for the waste positive electrode active material and the sub-raw material, thereby improving the binding strength between particles. Accordingly, in (b) which will be described later, the binding strength of the sub-raw material and/or a metal element included in the sub-raw material to particles formed by grinding the waste positive electrode active material may be improved. In addition, in the subsequent process step, a precursor and a lithium composite oxide, which are formed in an almost spherical shape with high density, may be formed by inhibiting particle breakage or destruction.

As the binder, a compound selected from lithium hydroxide, sodium hydroxide, a carboxylic acid or a salt thereof (e.g., acetic acid, acrylic acid, citric acid, ascorbic acid, formic acid, lactic acid, malic acid, malonic acid, oxalic acid, tartaric acid, a polycarboxylic acid, a polycarboxylic acid sodium salt, a polycarboxylic acid ammonium salt, a polycarboxylic acid amine salt, a carboxymethyl cellulose sodium salt or the like), a saccharide (starch, monosaccharide, disaccharide, polysaccharide, dextrin, cyclodextrin, maltodextrin or the like), a polymer (polyvinyl alcohol, polyvinyl butyral, polyacrylic acid, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polyethylene glycol, polypropylene, polyamideimide, polyimide, styrene-butadiene rubber, acrylated styrene-butadiene rubber, polyvinyl alcohol, sodium polyacrylate, a copolymer of propylene and an olefin having 2 to 8 carbon atoms, or a copolymer of (meth)acrylic acid and (meth)acrylic acid alkyl ester) and/or sodium dodecyl benzene sulfonate may be used.

Subsequently, in (b), the waste positive electrode active material in the slurry prepared in (a) is ground.

To grind the waste positive electrode active material, a dry or wet dispersion mill such as a ball mill, a bead mill (using beads conventionally used to grind a metallic raw material such as Al beads, Fe beads or Zr beads), a vibratory mill, an attritor mill, an air jet mill, a disk mill or an air classifier mill may be used.

The average particle diameter of the waste positive electrode active material ground in (b) may be 0.1 to 5 $\mu$m.

After completing the grinding of (b), the viscosity of the slurry is preferably in the range of 3,000 to 20,000cp.

As the slurry has the above range of viscosity, the condensation time may be shortened during spray-drying in (c) which will be described later, and it is possible to obtain a precursor with high density as the content of moisture lost by drying is small.

When the viscosity of the slurry is less than 3,000 cp, since not only does the condensation time during spray drying increase, but also the water content lost during drying increases, there are concerns about a reduced density of a precursor and many voids formed in the precursor. A precursor that has a low density and many voids is likely to exhibit weak particle strength. In this case, since the positive electrode active material is destroyed during charging/discharging or storage of a lithium secondary battery using a positive electrode active material prepared using the precursor, the electrochemical properties of the lithium secondary battery may be lowered, or the stability thereof may be degraded.

In contrast, when the viscosity of the slurry exceeds 20,000 cp, since the flowability of the slurry is low in a spray dryer in which the spray drying in (c) is being performed, it may be difficult to not only achieve sufficient process efficiency but also obtain a precursor prepared through spray drying in an almost spherical shape.

In addition, before spray-drying the slurry in (c), a binder may be further added to the slurry. Here, the binder may be the same as the binder used in (a) described above.

The input amount of the binder may vary according to the contents of raw materials (the waste positive electrode active material and the sub-raw material) in the slurry and the molecular weight of the binder, and the raw materials (the waste positive electrode active material and the sub-raw material) in the slurry are preferably added at 1% or less with respect to total weight of the slurry. When the binder is already added in (a), the sum of the amount of the binder added in (a) and the amount of the binder added before (c) is preferably 1% or less with respect to the total weight of the raw materials (the waste positive electrode active material and the sub-raw material) in the slurry.

Meanwhile, before spray-drying the slurry in (c), the temperature of the slurry is preferably adjusted within the range of 15 to 70 °C. Here, before spray-drying, the temperature of the slurry means the temperature of the slurry before adding the slurry into a spray dryer in which spray-drying is performed in (c).

When the temperature of the slurry is less than 15 °C, since there is a large difference from the temperature under an environment in which the spray-drying in (c) is performed, a heat shock applied to particles (ground wasted positive electrode active material) in the slurry may be excessively large. In this case, the destruction of the particles (ground wasted positive electrode active material) in the slurry may be caused.

In contrast, when the temperature of the slurry exceeds 70 °C, it may be difficult to precisely control the viscosity of the slurry due to the evaporation of a solvent in the slurry.

As described above, the slurry in which the waste positive electrode active material is ground may be spray-dried in (c) to obtain a precursor.

Step (c) may be performed in a spray dryer, and as the spray dryer, any device for spray-drying, which can prepare a dried precursor with an almost spherical shape through spray-drying the slurry including the ground waste positive electrode active material may be used without particular limitation. For example, an ultrasonic atomizer, a monoflow-nozzle atomizer, a twin-flow-nozzle atomizer, an ultrasonic nozzle atomizer, a filter expansion aerosol generator (FEAG) or a disk-type aerosol generator may be used.

The spray dryer in which the spray drying in (c) is performed may include a spray nozzle and a drying chamber, and the slurry is atomized into an aerosol with a predetermined particle size using the spray nozzle and then sprayed into the drying chamber in which there is a relatively high-temperature gas flow.

The raw materials (the waste positive electrode active material and the sub-raw material) in the aerosol sprayed into the drying chamber are synthesized as a dried precursor in an almost spherical shape under a temperature environment in the drying chamber.

To prepare a precursor from the raw materials in the aerosol, the temperature in the drying chamber is preferably adjusted within the range of 50 to 500 °C.

The viscosity of the slurry spray-dried in (c) is 3,000 to 20,000 cp, and the flow rate of compressed air used to spray-dry the slurry having a relatively high viscosity through the spray nozzle is preferably 40 L/min or more. When the flow rate of the compressed air is less than 40 L/min, there is a risk that the spray nozzle is clogged with the slurry having a relatively high viscosity and thus the efficiency of the spray drying process is reduced.

In addition, when having the above-described viscosity range, the condensation time of the slurry during spray drying may be shortened, and it is possible to obtain a precursor having a high density due to a low water content lost by drying.

When the viscosity of the slurry in (c) is less than 3,000 cp, since not only does the condensation time during spray drying increase, but also the water content lost during drying increases, there are concerns about a reduced density of a precursor and many voids formed in the precursor. A precursor that has a low density and many voids is likely to exhibit weak particle strength. In this case, since the positive electrode active material is destroyed during charging/discharging or storage of a lithium secondary battery using a positive electrode active material prepared using the precursor, the electrochemical properties of the lithium secondary battery may be lowered, or the stability thereof may be degraded.

In contrast, when the viscosity of the slurry exceeds 20,000 cp, since the flowability of the slurry is low in a spray dryer, it may be difficult to not only achieve sufficient process efficiency but also obtain a precursor prepared through spray drying in an almost spherical shape.

For specific conditions for the spray drying performed in (c), Preparation Examples to be described below may be referred to.

The average particle diameter of the precursor prepared in (c) may be 0.1 to 20 $\mu$m, and the ratio ($D_{50}/D_{10}$) of a 50% cumulative distribution of particles ($D_{50}$) and a 10% cumulative distribution of particles ($D_{10}$) of the precursor is preferably 1.92 to 6.24.

The $D_{50}/D_{10}$ is preferably at least 1.92 or more to improve electrode density. Meanwhile, when the $D_{50}/D_{10}$ exceeds 6.24, the particle size distribution of the precursor is excessively wide, and thus it may be difficult to obtain a lithium composite oxide having a uniform particle diameter through a subsequent process.

Meanwhile, when a positive electrode active material is prepared using a waste positive electrode active material-derived precursor according to the preparation method described herein, instead of using a precursor synthesized by co-precipitation, the density of the lithium composite oxide included in the positive electrode active material may decrease, or the lithium composite oxide may exhibit weak particle strength due to the formation of many voids. In this case, as the positive electrode active material is destroyed during charging/discharging or storage of a lithium secondary battery using the positive electrode active material, the electrochemical properties of the lithium secondary battery may be degraded, or the stability thereof may decrease.

However, the positive electrode active material prepared by the method according to the present invention may not only improve the density of a waste positive electrode active material-derived precursor but also reduce the formation of voids, thereby improving the particle strength of the lithium composite oxide. The strength of particles of the waste positive electrode active material-derived precursor or the positive electrode active material prepared using the waste positive electrode active material-derived precursor may be confirmed by measuring particle size distribution changed by artificial physical treatment on the precursor or the positive electrode active material.

For example, the change rate of $D_{50}/D_{10}$ of the precursor measured after sonication of the precursor prepared in (c) at a frequency of 40 kHz for 60 seconds may be 43% or less.

When the change rate of $D_{50}/D_{10}$ of the precursor after sonication of the precursor under the above-described conditions exceeds 43%, since the particle strength of the precursor is insufficient, the stability of the positive electrode active material prepared using the precursor may decrease.

Subsequently, the precursor prepared in (c) is thermally treated to obtain a lithium composite oxide (d).

In one embodiment, in (d), before thermally treating the precursor prepared in (c), at least one selected from at least one sub-raw material including an element selected from Mn, Co, Al, B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd and Cu and lithium-containing raw materials may be further added. The sub-raw material may be provided in the form of at least one selected from a sulfate, a carbonate, a nitrate, an acetate, a chloride, a hydroxide and an oxide.

The content of the sub-raw material added in (d) may be changed according to the composition of the waste positive electrode active material and the composition of a positive electrode active material targeted in the preparation method defined herein.

Accordingly, when thermal treatment is performed on a mixture of the precursor and the sub-raw material in (d), an element included in the sub-raw material of the lithium composite oxide may be doped, or at least a part of the surface of the lithium composite oxide may be coated with an oxide represented by Formula 3 to be described below.

The electrochemical properties and stability of the lithium composite oxide may be improved by doping an element included in the sub-raw material into the lithium composite oxide.

As the lithium-containing raw material, lithium hydroxide, lithium carbonate, lithium nitrate or lithium acetate may be used.

The lithium-containing raw material added in (d) is preferably mixed such that a ratio of (Li/Metal) of the number of atoms (Li) of lithium to the total number of atoms (Metal) of metal elements excluding lithium among the raw materials (a precursor, a sub-raw material, and a lithium-containing raw material) in (d) is in the range of 1.5 or less.

When the lithium-containing raw material is further added to prepare the mixture in (e) to be described below, the lithium compound added in (d) is mixed such that a ratio of (Li/Metal) of the number of atoms (Li) of lithium to the total number of atoms (Metal) of metal elements excluding lithium among the raw materials is in the range of 1.0 or less, and the lithium compound added in (e) is preferably mixed such that a ratio of (Li/Metal) of the number of atoms (Li) of lithium to the total number of atoms (Metal) of metal elements excluding lithium among the raw materials is in the range of 1.5 or less.

The lithium-containing raw material may not only induce the lithiation of the precursor by a reaction with the precursor but also improve the binding ability between particles by serving as a binder for the precursor and the sub-raw material.

The thermal treatment temperature in (d) may be 300 to 1,000 °C, and the thermal treatment temperature in (d) may be changed according to the composition of the waste positive electrode active material and the composition of a positive electrode active material targeted in the preparation method described herein.

More specifically, the thermal treatment in (d) may be performed for 5 to 12 hours in a calcination furnace whose temperature is increased until 300 to 1,000 °C at a rate of 2 to 5 °C/min while maintaining an $O_2$ atmosphere. When the thermal treatment temperature in (d) is less than 300 °C, as the calcination of the precursor is insufficient, the crystal growth of the lithium composite oxide may be insufficient. In contrast, when the thermal treatment temperature in (c) exceeds 1,000 °C, rather, the thermal decomposition of the lithium composite oxide may occur, resulting in a decrease in particle strength or particle destruction.

The lithium composite oxide obtained in (d) may include primary particles and secondary particles formed by aggregating the primary particles. Likewise, the lithium composite oxide may be represented by Formula 1 or 2, but does not necessarily have the same composition as the waste positive electrode active material used as a raw material.

In addition, the method according to the present invention may further include (e) preparing a mixture by mixing at least one selected from at least one sub-raw material including an element selected from Mn, Co, Al, B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd and Cu and lithium-containing raw materials with the lithium composite oxide obtained in (d), and thermally treating the mixture.

The content of the sub-raw material added in (e) may be changed according to the composition of the waste positive electrode active material and the composition of a positive electrode active material targeted in the preparation method described herein.

The sub-raw material may be provided as at least one type selected from a sulfate, a carbonate, a nitrate, an acetate, a chloride, a hydroxide, and an oxide.

In the thermal treatment on a mixture of the lithium composite oxide in (e) and the sub-raw material, at least a part of the surface of the lithium composite oxide may be coated with an oxide represented by Formula 3 below.

[Formula 3]     $Li_aA_bO_c$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd, and Nd,

$0 \leq a \leq 10$, $0 < b \leq 8$, and $2 \leq c \leq 13$.)

The oxide represented by Formula 3 may be present on at least a part of the surface of the lithium composite oxide, and a region of the surface of the lithium composite oxide in which an oxide represented by Formula 3 is present may be defined as a coating layer.

In addition, when the lithium composite oxide includes primary particles and secondary particles formed by aggregating the primary particles, the oxide represented by Formula 2 may be present on at least a part of the surface(s) of the primary particle (e.g., the interface between the primary particles) and/or the secondary particle formed by aggregating the primary particles.

The coating layer may be present as a layer that continuously or discontinuously coats the surface(s) of the primary particle and/or the secondary particle formed by aggregating the primary particles. When the coating layer is discontinuously present, it may be present in the form of an island.

In addition, in some cases, the oxide may also be present not only on at least a part of the interface between the primary particles and the surface of the secondary particles but also in an inner void formed in the secondary particle.

Here, the coating layer may be present in the form of a solid solution in which the primary particle and/or the secondary particle formed by aggregating the primary particles do not form a boundary, but the present invention is not necessarily limited thereto.

The coating layer may contribute to an improvement in stability of the lithium composite oxide or electrochemical properties of the lithium composite oxide by removing a remaining lithium by-product present on the surface of the lithium composite oxide.

In addition, as described in (d), to prepare the mixture in (e), the lithium-containing raw material may be further added.

The lithium-containing raw material further added in (e) is a lithium compound that can induce additional lithiation of the lithium composite oxide during thermal treatment in (e), and as the lithium compound, lithium hydroxide, lithium carbonate, lithium nitrate or lithium acetate may be used.

The lithium compound further added in (e) is preferably mixed such that a ratio of (Li/Metal) of the number of atoms (Li) of lithium to the total number of atoms (Metal) of metal elements excluding lithium among the lithium composite oxide as the final product is in the range of 1.5 or less.

The thermal treatment temperature in (e) for forming the coating layer on the surface of the lithium composite oxide may be 300 to 1,000 °C. More specifically, the thermal treatment in (e) may be performed 5 to 12 hours in a calcination furnace whose temperature is increased until 300 to 1,000 °C at a rate of 2 to 5 °C/min while maintaining an $O_2$ atmosphere. When the thermal treatment temperature in (e) is less than 300 °C, the crystal growth of the oxide constituting the coating layer on the surface of the lithium composite oxide may be insufficient. In contrast, when the thermal treatment temperature in (e) exceeds 1,000 °C, the thermal decomposition of the lithium composite oxide and/or the oxide may occur.

In addition, before (e), disintegration, distribution, iron removal and/or washing may be performed on the lithium composite oxide obtained in (d).

Particularly, before (e), the washing process may be selectively performed on the lithium composite oxide obtained in (d).

As a by-product remaining in the lithium composite oxide (e.g., including a residual lithium by-product and/or an unreacted sub-raw material) may be removed by reacting the lithium composite oxide obtained in (d) and a washing solution, in (e), an intended reaction between the lithium composite oxide and a sub-raw material for forming a coating layer on the surface of the lithium composite oxide may be induced.

Positive electrode active material

According to one aspect of the present invention, a positive electrode active material is provided by the above-described preparation method, that is, using a waste positive electrode active material.

The positive electrode active material is provided as an aggregate including primary particles consisting of a lithium composite oxide enabling intercalation/deintercalation of lithium and a secondary particle formed by aggregating a plurality of the primary particles.

Here, the primary particle means one grain or crystallite, and the secondary particle means an aggregate formed by aggregating a plurality of primary particles. The primary particle may have a rod shape, an oval shape and/or an irregular shape. There is a void and/or a grain boundary between the primary particles constituting the secondary particle. In another embodiment, the positive electrode active material may include a lithium composite oxide present in the form of a single crystal having an average particle diameter of 0.1 $\mu$m or more.

The primary particle is spaced apart from a neighboring primary particle in the secondary particle to form an inner void. In addition, the primary particle may come into contact with an inner void without a grain boundary formed by coming into contact with a neighboring primary particle, and thus a surface present inside the secondary particle may be formed. Meanwhile, the surface of the primary particle present on the outermost surface of the secondary particle and exposed to external air forms the surface of the secondary particle.

Here, as the average particle diameter of the primary particle (here, the average particle diameter of the primary particle may be the average major axis length of the primary particle) is present in the range of 0.1 to 5 $\mu$m, the optimal density of a positive electrode manufactured using each of the positive electrode active materials according to various embodiments of the present invention may be realized. In addition, since the particle strength of the positive electrode active material prepared using the waste positive electrode active material according to the preparation method described herein is improved, even when the average particle diameter of the primary particles is in the range of 0.1 to 5 $\mu$m, there is little possibility of particle breakage.

The average particle diameter of the secondary particles formed by aggregating a plurality of the primary particles may vary according to the number of aggregated primary particles and may be generally 3 to 20 $\mu$m.

The lithium composite oxide may be represented by Formula 1 or 2 below.

[Formula 1]    $Li_w Ni_{1-x} M_x C_{2-y} X_y$

(Here,

M is at least one selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu,
X is selected from F, S and P,
$0.5 < w < 1.5$, $0 \leq x \leq 0.80$, and $0 \leq y \leq 2$.)

[Formula 2]    $Li_w Ni_{1-(x+y+z)} Co_x M1_y M2_z O_2$

(Here,

M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
$0.5 < w < 1.5$, $0 \leq x \leq 0.40$, $0 < y \leq 0.40$, and $0 \leq z \leq 0.40$.)

The composition of the lithium composite oxide may be changed according to the composition of a waste positive electrode active material as the raw material used in the preparation method described herein, and the type and composition of a sub-raw material additionally used herein.

Particularly, when the positive electrode active material according to the present invention includes a lithium composite oxide including at least (1) any one selected from manganese and aluminum; (2) nickel; and (3) cobalt, 3 wt% or more, and preferably, 5 wt% or more of the (1) any one selected from manganese and aluminum; (2) nickel; and (3) cobalt in the lithium composite oxide with respect to the total weight of the lithium composite oxide may be derived from the waste positive electrode active material.

The positive electrode active material according to the present invention is a positive electrode active material prepared using a waste positive electrode active material, and the content of the waste positive electrode active material in the positive electrode active material may be changed according to the composition of the waste positive electrode active material or the composition of a target positive electrode active material, but as the content of the waste positive electrode active material-derived component in the positive electrode active material as the final product increases, it may further contribute to a reduction in costs of the positive electrode active material and a lithium secondary battery. However, when the content of the waste positive electrode active material-derived component in the positive electrode active material excessively increases, the electrochemical properties or stability of the positive electrode active material may decrease, so the total content of the waste positive electrode active material-derived component in the positive electrode active material is preferably 70 wt% or less.

Meanwhile, the ratio ($D_{50}/D_{10}$) of a 50% cumulative distribution of particles ($D_{50}$) and a 10% cumulative distribution of particles ($D_{10}$) of the positive electrode active material prepared using a waste positive electrode active material according to the preparation method described herein is preferably 2.0 to 7.0 to improve the density of the electrode manufactured using the positive electrode active material.

Meanwhile, when the positive electrode active material is prepared using the waste positive electrode active material-derived precursor according to the preparation method described herein, instead of using a precursor synthesized by co-precipitation, the density of the lithium composite oxide included in the positive electrode active material may decrease, or the lithium composite oxide may exhibit weak particle strength due to the formation of many voids. In this case, as the positive electrode active material is destroyed during charging/discharging or storage of a lithium secondary battery using the positive electrode active material, the electrochemical properties of the lithium secondary battery may be degraded, or the stability thereof may decrease.

However, the positive electrode active material prepared by the preparation method described herein may not only improve the density of a waste positive electrode active material-derived precursor but also reduce the formation of voids, thereby improving the particle strength of the lithium composite oxide. The strength of particles of the positive electrode active material prepared using the waste positive electrode active material-derived precursor may be confirmed by measuring particle size distribution changed by artificial physical treatment on the precursor or the positive electrode active material.

For example, the change rate of $D_{50}/D_{10}$ of the precursor measured after sonication of the positive electrode active material at a frequency of 40 kHz for 60 seconds may be 10% or less.

When the change rate of $D_{50}/D_{10}$ of the precursor after sonication of the precursor under the above-described conditions exceeds 10%, since the particle strength of the precursor is insufficient, the stability of the positive electrode active material prepared using the precursor may decrease.

In addition, the positive electrode active material may include a coating layer for covering at least a part of the surface(s) of the primary particle (e.g., the interface between the primary particles) and/or the secondary particle formed by aggregating the primary particles.

For example, the coating layer may be present to cover at least a part of the exposed surface of the primary particle. Particularly, the coating layer may be present to cover at least a part of the exposed surface of the primary particle present on the outermost surface of the secondary particle.

Accordingly, the coating layer may be present as a layer that continuously or discontinuously coats the surface(s) of the primary particle and/or the secondary particle formed by aggregating the primary particles. When the coating layer is discontinuously present, it may be present in the form of an island.

In addition, in some cases, the oxide may also be present not only on at least a part of the interface between the primary particles and the surface of the secondary particles but also in an inner void formed in the secondary particle.

The coating layer present as described above may contribute to an improvement in electrochemical properties and stability of a positive electrode active material.

Here, the coating layer may be present in the form of a solid solution in which the primary particle and/or the secondary particle formed by aggregating the primary particles do not form a boundary, but the present invention is not necessarily limited thereto.

In addition, there may be at least one oxide represented by Formula 2 below in the coating layer. That is, the coating layer may be defined as a region in which an oxide represented by Formula 3 below is present.

$$[\text{Formula 3}] \qquad Li_aA_bO_c$$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd and Nd,

$0 \leq a \leq 10$, $0 < b \leq 8$, and $2 \leq c \leq 13$.)

The oxide represented by Formula 3 may be an oxide in which lithium and an element represented by A are complexed, or an oxide of A, and the oxide may be, for example, $Li_aW_bO_c$, $Li_aZr_bO_c$, $Li_aTi_bO_c$, $Li_aNi_bO_c$, $Li_aCo_bO_c$, $Li_aAl_bO_c$, $Co_bO_c$, $Al_bO_c$, $W_bO_c$, $Zr_bO_c$ or $Ti_bO_c$. The above-described examples are merely provided to help convenience of understanding, and the oxide described herein is not limited thereto.

In another embodiment, the oxide represented by Formula 3 may be an oxide in which lithium and at least two types of elements represented by A are complexed, or may further include an oxide in which lithium and at least two types of elements represented by A are complexed. The oxide in which lithium and at least two types of elements represented by A are complexed may be, for example, $Li_a(W/Ti)_bO_c$, $Li_a(W/Zr)_bO_c$, $Li_a(W/Ti/Zr)_bO_c$, or $Li_a(W/Ti/B)_bO_c$, but the present invention is not necessarily limited thereto.

As described above, the positive electrode active material according to the embodiment may have higher structural stability because it includes a coating layer that covers at least a part of the surface(s) of the primary particle (e.g., the interface between the primary particles) and/or the secondary particle formed by aggregating the primary particles. In addition, as the positive electrode active material is used as a positive electrode active material for a lithium secondary battery, lifetime and capacity characteristics may be improved.

In addition, the coating layer may not only reduce residual lithium in the lithium composite oxide but also serve as a diffusion path of lithium ions, resulting in in improving the efficiency characteristics of a lithium secondary battery.

In addition, the oxide may have a concentration gradient that decreases from the surface portion to the central portion of the secondary particle. Accordingly, the concentration of the oxide may decrease from the outermost surface to the central portion of the secondary particle.

As described above, as the oxide has a concentration gradient that decreases from the surface portion to the central portion of the secondary particle, residual lithium present on the surface of the positive electrode active material may be effectively reduced to prevent side reactions with unreacted residual lithium in advance. Also, due to the oxide, it is possible to prevent crystallinity from being lowered in a region inside the surface of the positive electrode active material. In addition, the destruction of the entire structure of the positive electrode active material during an electrochemical reaction may be prevented due to the oxide.

Lithium secondary battery

According to another aspect of the present invention, a positive electrode including a positive electrode current collector and a positive electrode active material layer formed on the positive electrode current collector may be provided.

Here, the positive electrode active material layer may include any of the above-described positive electrode active materials prepared by the preparation methods according to various embodiments of the present invention as a positive electrode active material.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may typically have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. In addition, the lithium secondary battery may be provided as an anode-free secondary battery. Here, since the positive electrode is the same as described above, for convenience, detailed description for the positive electrode will be omitted, and other components which have not been described below will be described in detail. In addition, it should be understood that the description about a negative electrode, which will be provided later, is based on the premise that the lithium secondary battery includes a negative electrode.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ (0<$\beta$<2), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte wettability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multilayered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1: 1 to 1:9, the electrolyte may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

Preparation Example 1. Preparation of positive electrode active material using waste positive electrode active material

(1) Example 1

A waste positive electrode active material having an average particle diameter of 15 $\mu$m was recovered from a lithium secondary battery prepared from $Li[Ni_{1/3}Co_{1/3}Mn_{1/3}]O_2$, and then the composition of the recovered waste positive electrode active material was confirmed using ICP-OES.

After putting beads with sizes of 0.6 mm and 0.3 mm into a bead mill (Netch, LabStar Mini) to account for 70% of the inner space of the mill, deionized water (DIW) was added to have a weight ratio of 1:1 with respect to the beads and rotated.

A slurry was prepared by adding the waste positive electrode active material, nickel hydroxide and cobalt hydroxide weighed to be a molar ratio of Ni, Co and Mn of 80: 10: 10 in the target positive electrode active material with respect to 0.2 kg of the waste positive electrode active material in a bead mill and stirring the resulting mixture. Subsequently, the slurry was ground in the bead mill so that the average particle diameter of the waste positive electrode active material became 0.5 $\mu$m or less. After completing grinding, the viscosity of the slurry was measured to be 5,000 cp and the temperature of the slurry was measured to be 25 °C.

The prepared slurry was put into a raw material storage container that was attached to a spray dryer (Dongjin Technology Institute, DJE003R) and stirred at 200 rpm to keep the slurry from precipitating and separating. The stirring rate of the slurry was adjusted to decrease as the amount of the slurry decreased.

The slurry was transferred to a spray drying chamber at a transfer rate of 1 kg/hr using a tubular feeding pump. An atomizer used for spray drying was a twin-flow spray nozzle, an input temperature was 235 °C, and an output temperature was maintained at 100 °C or more.

In the drying chamber, to rapidly remove moisture, the temperature was constantly maintained at 235 °C, and the slurry sprayed through the spray nozzle was atomized in the form of an aerosol and prepared in the form of a spherical ultrafine powder (precursor).

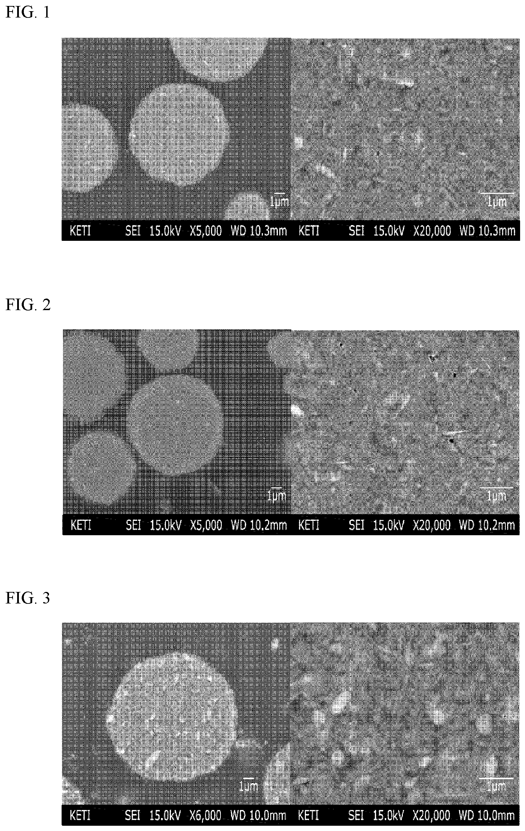

During the spray drying, a precursor was prepared by allowing high-temperature air obtained by heating absorbed atmospheric air to come into contact with an aerosol sprayed in a co-current flow, and discharging a vapor evaporated thereby into the atmosphere or removing it by installing a vapor trap. The cross-sectional SEM image of the prepared precursor is shown in FIG. 1.

Subsequently, after putting the prepared precursor into a non-gravity mixer, lithium hydroxide was added and stirred for 1 hour, thereby preparing a mixture. Here, the amount of lithium hydroxide was added such that a ratio (Li/Metal) of the total number of atoms (Li) of Li of the precursor and Li added as lithium hydroxide to the total number of atoms (Metal) of metal elements excluding Li became 1.05.

Subsequently, the mixture was thermally treated for 12 hours in a calcination furnace whose temperature was increased to 680 °C at 2 °C/min while maintaining an $O_2$ atmosphere, thereby obtaining a lithium composite oxide (positive electrode active material).

As a result of ICP-OES analysis of the obtained positive electrode active material, the composition of the positive electrode active material was identified as $Li_{1.05}Ni_{0.8}Co_{0.1}Mn_{0.1}O_2$. In addition, as shown in Table 1 below, the weight of the waste positive electrode active material used as a raw material with respect to the total weight of the finally obtained positive electrode active material was calculated to be 30.9 wt%.

Table 1

| Total input amount (kg) (waste positive electrode active material + additional raw material) | Proportion of waste positive electrode active material (%) in final product (positive electrode active material) | Proportion of additional raw material (%) in final product (positive electrode active material) |
|---|---|---|
| 0.646 | 30.9 | 69.1 |

(2) Example 2

A positive electrode active material was prepared in the same manner as in Example 1, except that the content of deionized water (DIW) in the slurry was controlled so that the viscosity of the slurry before spray drying became 8,000 cp.

As a result of ICP-OES analysis of the obtained positive electrode active material, the composition of the positive electrode active material was identified as $Li_{1.05}Ni_{0.8}Co_{0.1}Mn_{0.1}O_2$. In addition, the weight of the waste positive electrode active material with respect to the total weight of the obtained positive electrode active material was the same as Example 1.

(3) Example 3

A positive electrode active material was prepared in the same manner as in Example 1, except that the content of deionized water (DIW) in the slurry was controlled so that the viscosity of the slurry before spray drying became 15,000 cp.

As a result of ICP-OES analysis of the obtained positive electrode active material, the composition of the positive electrode active material was identified as $Li_{1.05}Ni_{0.8}Co_{0.1}Mn_{0.1}O_2$. In addition, the weight of the waste positive electrode active material with respect to the total weight of the obtained positive electrode active material was the same as Example 1.

The cross-sectional SEM image of the precursor obtained during the preparation of the positive electrode active material according to Example 3 is shown in FIG. 2.

(4) Example 4

A positive electrode active material was prepared in the same manner as in Example 1, except that $ZrO_2$ was weighed to be 0.1 mol% with respect to the precursor and mixed before thermal treatment.
As a result of ICP-OES analysis of the obtained positive electrode active material, the composition of the positive electrode active material was identified as $Li_{1.05}Ni_{0.79}Co_{0.09}Mn_{0.09}Zr_{0.01}O_2$. In addition, the weight of the waste positive electrode active material with respect to the total weight of the obtained positive electrode active material was the same as Example 1.

(5) Example 5

A positive electrode active material was prepared in the same manner as in Example 1, except that a lithium composite oxide was obtained by thermally treating the precursor, and $TiO_2$ was weighed to be 0.3 mol% with respect to the lithium composite oxide and mixed.
As a result of ICP-OES analysis of the obtained positive electrode active material, the composition of the positive electrode active material was identified as $Li_{1.05}Ni_{0.79}Co_{0.09}Mn_{0.09}Ti_{0.02}O_2$. In addition, the weight of the waste positive electrode active material with respect to the total weight of the obtained positive electrode active material was the same as Example 1.

(6) Examples 6 to 8

A positive electrode active material was prepared in the same manner as in Example 1 using each of waste positive electrode active materials having compositions of $Li[Ni_{0.4}Co_{0.2}Mn_{0.4}]O_2$, $Li[Ni_{0.5}Co_{0.2}Mn_{0.3}]O_2$ and $Li[Ni_{0.6}Co_{0.2}Mn_{0.2}]O_2$, which have average particle diameters of 15 $\mu$m, as a raw material. In addition, for Example 6, the content of DIW in the slurry was adjusted so that the viscosity of the slurry before spray drying became 3,000 cp, and for Example 8, the content of DIW in the slurry was adjusted so that the viscosity of the slurry before spray drying became 20,000 cp.
As the result of ICP-OES analysis of the obtained positive electrode active materials, the composition of all the positive electrode active materials was identified as $Li_{1.05}Ni_{0.8}Co_{0.1}Mn_{0.1}O_2$. In addition, the weight of each of the waste positive electrode active materials used as a raw material with respect to the total weight of the finally obtained positive electrode active material was calculated as in Table 2 below.

Table 2]

| Classification | Composition of waste positive electrode active material | Total input amount (kg) (waste positive electrode active material + additional raw material) | Proportion of waste positive electrode active material (%) in final product (positive electrode active material) | Proportion of additional raw material (%) in final product (positive electrode active material) |
|---|---|---|---|---|
| Example 6 | NCM424 | 0.778 | 26 | 74 |
| Example 7 | NCM523 | 0.584 | 34 | 66 |
| Example 8 | NCM622 | 0.391 | 51.1 | 48.9 |

(7) Examples 9 to 12

A positive electrode active material was prepared in the same manner as in Example 1, except that each of waste positive electrode active materials having the compositions of $Li[Ni_{1/3}Co_{1/3}Mn_{1/3}]O_2$, $Li[Ni_{0.4}Co_{0.2}Mn_{0.4}]O_2$, $Li[Ni_{0.5}Co_{0.2}Mn_{0.3}]O_2$ and $Li[Ni_{0.6}Co_{0.2}Mn_{0.2}]O_2$, which have average particle diameters of 15 $\mu$m, was used as a raw material, and the molar ratio of Ni, Co and Mn in the target positive electrode active material was 88:10:2.
As the result of ICP-OES analysis of the obtained positive electrode active materials, the composition of all the positive electrode active materials was identified as $Li_{1.05}Ni_{0.88}Co_{0.1}Mn_{0.02}O_2$. In addition, the weight of each of the waste positive electrode active material used as a raw material with respect to the total weight of the finally obtained positive electrode active material was calculated as in Table 3.

Table 3]

| Classification | Composition of waste positive electrode active material | Total input amount (kg) (waste positive electrode active material + additional raw material) | Proportion of waste positive electrode active material (%) in final product (positive electrode active material) | Proportion of additional raw material (%) in final product (positive electrode active material) |
|---|---|---|---|---|
| Example 9 | NCM333 | 3.206 | 6.2 | 93.8 |
| Example 10 | NCM424 | 3.861 | 5.2 | 94.8 |
| Example 11 | NCM523 | 2.887 | 6.9 | 93.1 |
| Example 12 | NCM622 | 1.921 | 10.4 | 89.6 |

(8) Comparative Example 1

A positive electrode active material was prepared using a $[Ni_{0.8}Co_{0.1}Mn_{0.1}]OH_2$ precursor synthesized by a known co-precipitation method.
As the result of ICP-OES analysis of the obtained positive electrode active materials, the composition of the positive electrode active material was identified as $Li_{1.05}Ni_{0.8}Co_{0.1}Mn_{0.1}O_2$.

(9) Comparative Example 2

A positive electrode active material was prepared in the same manner as in Example 1, except that the content of DIW in the slurry was controlled so that the viscosity of the slurry before spray drying became 500 cp.
As a result of ICP-OES analysis of the obtained positive electrode active material, the composition of the positive electrode active material was identified as $Li_{1.05}Ni_{0.8}Co_{0.1}Mn_{0.1}O_2$. In addition, the weight of the waste positive electrode active material with respect to the total weight of the obtained positive electrode active material was the same as Example 1.

(10) Comparative Example 3

A positive electrode active material was prepared in the same manner as in Example 1, except that the content of deionized water (DIW) in the slurry was controlled so that the viscosity of the slurry before spray drying was 2,000 cp.
As a result of ICP-OES analysis of the obtained positive electrode active material, the composition of the positive electrode active material was identified as $Li_{1.05}Ni_{0.8}Co_{0.1}Mn_{0.1}O_2$. In addition, the weight of the waste positive electrode active material with respect to the total weight of the obtained positive electrode active material was the same as Example 1. The cross-sectional SEM image of the precursor obtained during the preparation of the positive electrode active material according to Comparative Example 3 is shown in FIG. 3.

(10) Comparative Example 4

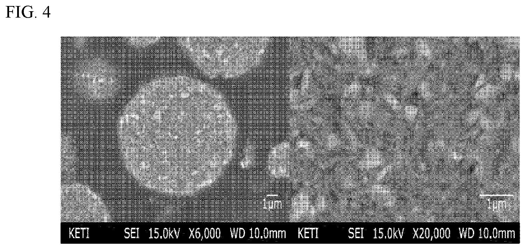

A positive electrode active material was prepared in the same manner as in Example 1, except that, after grinding was performed in a bead mill, nickel hydroxide and cobalt hydroxide in the slurry were weighed so that the average particle diameter of the waste positive electrode active material became 0.5 $\mu$m or less.
As a result of ICP-OES analysis of the obtained positive electrode active material, the composition of the positive electrode active material was identified as $Li_{1.05}Ni_{0.8}Co_{0.1}Mn_{0.1}O_2$. In addition, the weight of the waste positive electrode active material with respect to the total weight of the obtained positive electrode active material was the same as Example 1.
The cross-sectional SEM image of the precursor obtained during the preparation of the positive electrode active material according to Comparative Example 4 is shown in FIG. 4.

Preparation Example 2. Manufacture of lithium secondary battery

A positive electrode slurry was prepared by dispersing 92 wt% of each of the positive electrode active materials prepared according to Preparation Example 1, 4 wt% of carbon black, and 4 wt% of a PVDF binder in N-methyl-2 pyrrolidone (NMP). The positive slurry was uniformly applied on an aluminum thin film with a thickness of 15 $\mu$m and dried under vacuum at 135 °C, thereby manufacturing a positive electrode for a lithium secondary battery.

The positive electrode, lithium foil as a counter electrode, a porous polyethylene film (Celgard 2300, thickness: 25 $\mu$m) as a separator, and a electrolyte prepared by adding $LiPF_6$ at 1.15M in a solvent in which ethylene carbonate and ethyl methyl carbonate were mixed in a volume ratio of 3:7 were used to manufacture a coin-cell.

Experimental Example 1. Evaluation of particle characteristics of positive electrode active material

0.1 g each of the precursor and the lithium composite oxide obtained during the preparation of the positive electrode active material in Preparation Example 1 was added and dispersed in 50 ml of an aqueous solution of sodium hexametaphosphate, thereby obtaining a dispersion. Subsequently, the average particle diameters and particle size distributions of the precursor and the lithium composite oxide in the dispersion were measured using a laser diffraction/scattering particle size distribution measurement device (Cilas PSA 1060), and a volume-based cumulative particle size distribution curve was obtained.

Subsequently, after the dispersion was subjected to sonication using a sonication unit included in the particle size distribution measurement device at a frequency of 40 kHz for 60 seconds, the change rate of $D_{50}/D_{10}$ was measured.

In the obtained cumulative particle size distribution curve, a volumetric particle size at 10% accumulation was set as a 10% cumulative volumetric particle size ($D_{10}$), a volumetric particle size at 50% accumulation was set as a 50% cumulative volumetric particle size ($D_{50}$), and a volumetric particle size at 90% accumulation was set as a 90% cumulative volumetric particle size ($D_{90}$).

The change rate of $D_{50}/D_{10}$ was calculated as below.

$$D_{50}/D_{10} \text{ change rate (\%)} = (|D_{50}/D_{10} \text{ after sonication} - D_{50}/D_{10} \text{ before sonication}|/ D_{50}/D_{10} \text{ before sonication})*100$$

The measurement results of the particle size distributions of the precursor are shown in Tables 4 and 5 below, and the measurement results of the particle size distributions of the lithium composite oxide are shown in Tables 6 and 7 below.

Table 4]

| Classification | Particle size distribution before sonication | | | Particle size distribution after sonication | | |
|---|---|---|---|---|---|---|
| | $D_{10}$ | $D_{50}$ | $D_{90}$ | $D_{10}$ | $D_{50}$ | $D_{90}$ |
| Example 1 | 4.45 | 9.9 | 18.79 | 2.35 | 8.22 | 14.26 |
| Example 2 | 4.54 | 9.98 | 18.82 | 3.78 | 9.51 | 17.86 |
| Example 3 | 4.62 | 10.08 | 20.95 | 4.3 | 9.9 | 18.8 |
| Example 4 | 4.77 | 10.04 | 19.22 | 2.27 | 8.34 | 14.24 |
| Example 5 | 4.81 | 10.16 | 20.43 | 2.24 | 8.19 | 14.57 |
| Example 6 | 1.52 | 9.49 | 18.64 | 0.98 | 4.43 | 11.26 |
| Example 7 | 4.64 | 9.82 | 18.95 | 2.58 | 8.45 | 14.27 |
| Example 8 | 5.54 | 10.61 | 21.1 | 4.48 | 10.07 | 19.8 |
| Example 9 | 4.86 | 10.02 | 18.92 | 2.41 | 8.21 | 15.73 |
| Example 10 | 4.64 | 9.82 | 18.95 | 2.64 | 8.43 | 14.59 |
| Example 11 | 4.72 | 10.11 | 19.2 | 2.7 | 9.21 | 14.92 |
| Example 12 | 4.23 | 9.55 | 17.54 | 2.75 | 9.17 | 15.11 |
| Comparative Example 1 | 10.13 | 14.08 | 19 | 10.05 | 13.96 | 18.88 |
| Comparative Example 2 | 0.84 | 7.43 | 15.56 | 0.08 | 0.26 | 2.55 |
| Comparative Example 3 | 0.99 | 8.54 | 18.55 | 0.1 | 0.34 | 1.92 |

(continued)

| Classification | Particle size distribution before sonication | | | Particle size distribution after sonication | | |
|---|---|---|---|---|---|---|
| | $D_{10}$ | $D_{50}$ | $D_{90}$ | $D_{10}$ | $D_{50}$ | $D_{90}$ |
| Comparative Example 4 | 1.25 | 9.64 | 17.54 | 2.23 | 8.55 | 11.51 |

Table 5]

| Classification | $D_{50}/D_{10}$ before sonication | $D_{50}/D_{10}$ after sonication | $D_{50}/D_{10}$ change rate (%) |
|---|---|---|---|
| Example 1 | 2.22 | 3.50 | 36.4% |
| Example 2 | 2.20 | 2.52 | 12.6% |
| Example 3 | 2.18 | 2.30 | 5.2% |
| Example 4 | 2.10 | 3.67 | 42.7% |
| Example 5 | 2.11 | 3.66 | 42.2% |
| Example 6 | 6.24 | 4.52 | 38.1% |
| Example 7 | 2.12 | 3.28 | 35.4% |
| Example 8 | 1.92 | 2.25 | 14.8% |
| Example 9 | 2.06 | 3.41 | 39.5% |
| Example 10 | 2.12 | 3.19 | 33.7% |
| Example 11 | 2.14 | 3.41 | 37.2% |
| Example 12 | 2.26 | 3.33 | 32.3% |
| Comparative Example 1 | 1.39 | 1.39 | 0.1% |
| Comparative Example 2 | 8.85 | 3.25 | 172.2% |
| Comparative Example 3 | 8.63 | 3.40 | 153.7% |
| Comparative Example 4 | 7.71 | 3.83 | 101.1% |

Referring to the results in Tables 4 and 5, except for a precursor of a positive electrode active material prepared using a $[Ni_{0.8}Co_{0.1}Mn_{0.1}]OH_2$ precursor synthesized through a known co-precipitation method, when comparing the positive electrode active materials prepared using a waste positive electrode active material, after sonication of the precursors of the positive electrode active materials according to Examples 1 to 12, it can be confirmed that the change in particle size is smaller than those of the precursors of the positive electrode active materials according to Comparative Examples 2 to 4.

Table 6]

| Classification | Average particle diameter of primary particles ($\mu$m) | Particle size distribution before sonication | | | Particle size distribution after sonication | | |
|---|---|---|---|---|---|---|---|
| | | $D_{10}$ | $D_{50}$ | $D_{90}$ | $D_{10}$ | $D_{50}$ | $D_{90}$ |
| Example 1 | 0.57 | 3.66 | 9.81 | 18.69 | 3.53 | 9.67 | 18.77 |
| Example 2 | 0.62 | 3.27 | 9.84 | 18.66 | 3.24 | 9.49 | 18.49 |
| Example 3 | 0.64 | 3.18 | 9.93 | 19.74 | 3.13 | 9.91 | 19.67 |
| Example 4 | 0.73 | 3.46 | 9.75 | 19.07 | 3.37 | 9.65 | 19.06 |
| Example 5 | 0.69 | 3.64 | 10.01 | 19.87 | 3.46 | 9.86 | 19.72 |
| Example 6 | 0.61 | 1.38 | 9.23 | 17.69 | 1.52 | 9.26 | 17.46 |

(continued)

| Classification | Average particle diameter of primary particles ($\mu$m) | Particle size distribution before sonication | | | Particle size distribution after sonication | | |
|---|---|---|---|---|---|---|---|
| | | $D_{10}$ | $D_{50}$ | $D_{90}$ | $D_{10}$ | $D_{50}$ | $D_{90}$ |
| Example 7 | 0.59 | 3.72 | 9.7 | 18.64 | 3.59 | 9.59 | 18.45 |
| Example 8 | 0.57 | 4.29 | 10.14 | 19.86 | 4.23 | 10.07 | 19.73 |
| Example 9 | 0.59 | 3.44 | 9.99 | 18.94 | 3.27 | 9.78 | 18.57 |
| Example 10 | 0.63 | 3.3 | 9.81 | 18.8 | 3.22 | 9.81 | 18.62 |
| Example 11 | 0.62 | 3.41 | 9.92 | 19.01 | 3.44 | 9.71 | 18.88 |
| Example 12 | 0.61 | 3.5 | 9.46 | 17.41 | 3.41 | 9.46 | 17.42 |
| Comparative Example 1 | 0.7 | 9.49 | 13.83 | 18.25 | 9.35 | 13.58 | 18.25 |
| Comparative Example 2 | 0.69 | 0.54 | 7.01 | 15.28 | 0.72 | 7.11 | 15.93 |
| Comparative Example 3 | 0.74 | 0.66 | 7.14 | 18.26 | 1.11 | 7.2 | 17.95 |
| Comparative Example 4 | 0.73 | 1.17 | 9.01 | 17.37 | 1.98 | 9.02 | 17.33 |

Table 7]

| Classification | $D_{50}/D_{10}$ before sonication | $D_{50}/D_{10}$ after sonication | $D_{50}/D_{10}$ change rate (%) |
|---|---|---|---|
| Example 1 | 2.68 | 2.74 | 2.2% |
| Example 2 | 3.01 | 2.93 | 2.7% |
| Example 3 | 3.12 | 3.17 | 1.4% |
| Example 4 | 2.82 | 2.86 | 1.6% |
| Example 5 | 2.75 | 2.85 | 3.5% |
| Example 6 | 6.69 | 6.09 | 9.8% |
| Example 7 | 2.61 | 2.67 | 2.4% |
| Example 8 | 2.36 | 2.38 | 0.7% |
| Example 9 | 2.90 | 2.99 | 2.9% |
| Example 10 | 2.97 | 3.05 | 2.4% |
| Example 11 | 2.91 | 2.82 | 3.1% |
| Example 12 | 2.70 | 2.77 | 2.6% |
| Comparative Example 1 | 1.46 | 1.45 | 0.3% |
| Comparative Example 2 | 12.98 | 9.88 | 31.5% |
| Comparative Example 3 | 10.82 | 6.49 | 66.8% |
| Comparative Example 4 | 7.70 | 4.56 | 69.0% |

Referring to the results shown in Tables 6 and 7, except for Comparative Example 1, which is a positive electrode active material prepared using a $[Ni_{0.8}Co_{0.1}Mn_{0.1}]OH_2$ precursor synthesized through a known co-precipitation method, when comparing positive electrode active materials prepared using a waste positive electrode active material, after sonication of the positive electrode active materials (lithium composite oxides) according to Examples 1 to 12, it can be confirmed that the change in particle size distribution is smaller than those of the positive electrode active materials (lithium composite oxides) according to Comparative Examples 2 to 4.

Particularly, since the positive electrode active materials (lithium composite oxides) according to Examples 1 to 12 exhibit similar levels of a change in particle size distribution compared with Comparative Example 1, sufficient strength and stability for a positive electrode active material for a lithium secondary battery are expected to be ensured.

Experimental Example 2. Evaluation of electrochemical properties of lithium secondary

battery

Charge and discharge capacities were measured by performing charging/discharging experiments on the lithium secondary battery (coin-cell) manufactured in Preparation Example 2 using an electrochemical analyzer (Toyo, Toscat-3 100) at 25 °C in a voltage range of 3.0V to 4.3V and a discharge rate of 0.1C.

In addition, the same lithium secondary battery was charged/discharged for 100 times at 25 °C in an operating voltage range of 3.0V to 4.3V under the condition of 1C/1C, and then a ratio of the discharge capacity at the 100th cycle to the initial discharge capacity (capacity retention) was measured.

The measurement results are shown in Table 8 below.

[Table 8]

| Classification | Charge capacity (mAh/g) | Discharge capacity (mAh/g) | Charging/discharging efficiency (%) | Retention@50cy (%) |
|---|---|---|---|---|
| Example 1 | 220.4 | 194.8 | 88.4% | 95.9% |
| Example 2 | 220.4 | 195.8 | 88.8% | 96.0% |
| Example 3 | 222.1 | 201.2 | 90.6% | 98.6% |
| Example 4 | 223.9 | 198.3 | 88.6% | 97.4% |
| Example 5 | 223.9 | 198.3 | 88.6% | 98.2% |
| Example 6 | 221.1 | 196.4 | 88.8% | 94.7% |
| Example 7 | 220.9 | 195.6 | 88.5% | 94.1% |
| Example 8 | 220.5 | 195.7 | 88.8% | 95.3% |
| Example 9 | 229.1 | 211.5 | 92.3% | 93.4% |
| Example 10 | 228.6 | 212.5 | 93.0% | 92.8% |
| Example 11 | 227.9 | 210.5 | 92.4% | 92.3% |
| Example 12 | 227.5 | 211.8 | 93.1% | 92.2% |
| Comparative Example 1 | 227.4 | 210.6 | 92.6% | 98.3% |
| Comparative Example 2 | 207.2 | 180.9 | 87.3% | 94.7% |
| Comparative Example 3 | 221.1 | 196.4 | 88.8% | 95.5% |
| Comparative Example 4 | 222.1 | 201.2 | 90.6% | 95.7% |

Referring to the results in Table 8, compared with Comparative Example 1, which is a positive electrode active material prepared using a $[Ni_{0.8}Co_{0.1}Mn_{0.1}]OH_2$ precursor synthesized by a known co-precipitation method, it can be confirmed that lithium secondary batteries using the positive electrode active materials (lithium composite oxides) according to Examples 1 to 12 prepared using a waste positive electrode active material may also exhibit similar levels of electrochemical properties.

Experimental Example 3. Evaluation of stabilities of positive electrode active material and lithium secondary battery

(1) Evaluation of thermal stability of positive electrode active material

To evaluate the thermal stability of the positive electrode active material prepared according to Preparation Example 1, a weight loss was measured by increasing the temperature from 25 °C to 350 °C at a temperature-increase rate of 10 °C/min using a thermogravimetric device (TA Instruments, Q20) under normal pressure in an Ar atmosphere. Here, a starting temperature (on-set) at which a weight loss (thermal decomposition) peak appears for each positive electrode active material is shown in Table 9 below.

[Table 9]

| Classification | On-set Temp. (°C) |
|---|---|
| Example 1 | 236.8 |
| Example 2 | 236.3 |
| Example 3 | 237.5 |
| Example 4 | 238.7 |
| Example 5 | 243.8 |
| Example 6 | 239.3 |
| Example 7 | 238.2 |
| Example 8 | 237.9 |
| Example 9 | 224.6 |
| Example 10 | 223.5 |
| Example 11 | 223.9 |
| Example 12 | 223.9 |
| Comparative Example 1 | 236.6 |
| Comparative Example 2 | 232.6 |
| Comparative Example 3 | 233.8 |
| Comparative Example 4 | 233.5 |

Referring to the results in Table 9, it can be confirmed that the starting temperatures (on-set) at which a weight loss (thermal decomposition) peak appears for the positive electrode active materials according to Examples 1 to 12 prepared using a waste positive electrode active material are similar to or higher than those of the positive electrode active materials according to Comparative Examples 1 to 4. Accordingly, it can be confirmed that the thermal stabilities of the positive electrode active materials according to Examples 1 to 12 were sufficiently ensured.

(2) Measurement of amount of gas generation of lithium secondary battery

The lithium secondary battery manufactured according to Preparation Example 2 was charged to 4.25V with a constant current of 0.2C, stored at 60 °C for 14 days, and then the volumetric change in the lithium secondary battery, caused by gas generation in the lithium secondary battery, was measured. The results of measuring the volumetric change are shown in Table 10 below.

[Table 10]

| Classification | Volumetric change ($\Delta cm^3$) |
|---|---|
| Example 1 | 0.18 |
| Example 2 | 0.17 |
| Example 3 | 0.16 |

(continued)

| Classification | Volumetric change ($\Delta cm^3$) |
|---|---|
| Example 4 | 0.13 |
| Example 5 | 0.09 |
| Example 6 | 0.15 |
| Example 7 | 0.20 |
| Example 8 | 0.18 |
| Example 9 | 0.17 |
| Example 10 | 0.19 |
| Example 11 | 0.19 |
| Example 12 | 0.18 |
| Comparative Example 1 | 0.18 |
| Comparative Example 2 | 0.31 |
| Comparative Example 3 | 0.32 |
| Comparative Example 4 | 0.35 |

Referring to the results in Table 10, except for Comparative Example 1, which is a positive electrode active material prepared using a $[Ni_{0.8}Co_{0.1}Mn_{0.1}]OH_2$ precursor synthesized through a known co-precipitation method, when comparing the positive electrode active materials prepared using a waste positive electrode active material, it can be confirmed that the volumetric changes amount of lithium secondary batteries manufactured using the positive electrode active materials (lithium composite oxides) according to Examples 1 to 12 are smaller than those of the lithium secondary batteries using the positive electrode active materials (lithium composite oxides) according to Comparative Examples 2 to 4.

Particularly, since the positive electrode active materials (lithium composite oxides) according to Examples 1 to 12 exhibits similar levels of volumetric change amounts compared with Comparative Example 1, it is expected that sufficient stability as a positive electrode active material for a lithium secondary battery may be ensured.

In the above, the embodiments of the present invention have been described, but it will be understood by those of ordinary skill in the art that the present invention may be changed and modified in various ways by addition, alteration, or deletion of components without departing from the spirit of the present invention defined in the appended claims, and such changes and modifications may also be included in the scope of the present invention.

**Claims**

1. A positive electrode active material for a lithium secondary battery, comprising:

    a lithium composite oxide comprising at least (1) any one selected from manganese and aluminum; (2) nickel; and (3) cobalt,
    wherein 3 wt% or more of the (1) at least one selected from manganese and aluminum, (2) nickel, and (3) cobalt in the lithium composite oxide with respect to the total weight of the positive electrode active material is derived from a waste positive electrode active material.

2. The lithium composite oxide of claim 1, wherein the ratio ($D_{50}/D_{10}$) of a 50% cumulative distribution of particles ($D_{50}$) and a 10% cumulative distribution of particles ($D_{10}$) of the positive electrode active material is 2.0 to 7.0.

3. The lithium composite oxide of claim 1, wherein the lithium composite oxide is represented by Formula 2 below:

    [Formula 2]     $Li_wNi_{1-(x+y+z)}Co_xM1_yM2_zO_2$

    (Here,

M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
$0.5 < w < 1.5$, $0 \leq x \leq 0.40$, $0 < y \leq 0.40$, and $0 \leq z \leq 0.40$.)

4. The lithium composite oxide of claim 1, wherein the positive electrode active material comprises primary particles consist of the lithium composite oxide and a secondary particle in which a plurality of the primary particles are aggregated, and

the average particle diameter of the secondary particle is 3 to 20 $\mu$m.

5. The lithium composite oxide of claim 1, wherein the change rate of $D_{50}/D_{10}$ of the lithium composite oxide in the positive electrode material after sonication of the positive electrode active material at a frequency of 40 kHz for 60 seconds is 10% or less.

6. The lithium composite oxide of claim 1, wherein a coating layer comprising an oxide represented by Formula 3 below is present on at least a part of the surface of the lithium composite oxide,

[Formula 3]     $Li_a A_b O_c$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd and Nd,
$0 \leq a \leq 10$, $0 < b \leq 8$, and $2 \leq c \leq 13$.)

7. A method of preparing a positive electrode active material for a lithium secondary battery using a waste positive electrode active material, comprising:

(a) preparing a slurry by mixing a waste positive electrode active material and a solvent;
(b) grinding the waste positive electrode active material in the slurry;
(c) preparing a precursor by spray-drying the slurry in which the waste positive electrode active material is ground; and
(d) obtaining a lithium composite oxide by thermally treating the precursor, wherein the ratio ($D_{50}/D_{10}$) of a 50% cumulative distribution of particles ($D_{50}$) and a 10% cumulative distribution of particles ($D_{10}$) of the precursor prepared in (c) is 1.92 to 6.24.

8. The method of claim 7, wherein the waste positive electrode active material used in (a) comprises a lithium composite oxide represented by Formula 1 below,

[Formula 1]     $Li_w Ni_{1-x} M_x C_{2-y} X_y$

(Here,

M is at least one selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu,
X is selected from F, S and P,
$0.5 < w < 1.5$, $0 \leq x \leq 0.80$, and $0 \leq y \leq 2$.)

9. The method of claim 7, wherein the waste positive electrode active material used in (a) comprises a lithium composite oxide represented by Formula 2 below,

[Formula 2]     $Li_w Ni_{1-(x+y+z)} Co_x M1_y M2_z O_2$

(Here,

M1 is at least one selected from Mn and Al,
M2 is at least one selected from Mn, B, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd and Cu,
M1 and M2 are different elements,
0.5<w<1.5, 0≤x≤0.40, 0<y≤0.40, and 0≤z≤0.40.)

10. The method of claim 8 or 9, wherein, in (a), at least one sub-raw material comprising an element selected from Mn, Co, Al, B, Ba, Ce, Hf, Ta, Cr, Mg, V, Ti, Fe, Zr, Zn, Si, Y, Nb, Ga, Sn, Mo, W, Sr, Ge, Nd, Gd and Cu is further added to the slurry.

11. The method of claim 10, wherein the sub-raw material is provided as at least one type selected from a sulfate, a carbonate, a nitrate, an acetate, a chloride, a hydroxide, and an oxide.

12. The method of claim 7, wherein, in (a), a binder is further added to the slurry.

13. The method of claim 7, wherein the waste positive electrode active material ground in (b) has an average particle diameter of 0.1 to 5 μm.

14. The method of claim 7, wherein, in (c), before spray-drying the slurry, a binder is further added to the slurry.

15. The method of claim 7, wherein, in (c), before spray-drying the slurry, the viscosity of the slurry is adjusted within the range of 3,000 to 20,000 cp.

16. The method of claim 7, wherein, in (c), before spray-drying the slurry, the temperature of the slurry is adjusted within the range of 15 to 70 °C.

17. The method of claim 7, wherein the change rate of $D_{50}/D_{10}$ after sonication of the precursor prepared in (c) at a frequency of 40 kHz for 60 seconds is 43% or less.

18. The method of claim 7, wherein, in (d), before thermal treatment of the precursor, at least one selected from at least one sub-raw material comprising an element selected from Mn, Co, Al, B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd and Cu and lithium-containing raw materials is further added.

19. The method of claim 18, wherein the sub-raw material is provided as at least one type selected from a sulfate, a carbonate, a nitrate, an acetate, a chloride, a hydroxide, and an oxide.

20. The method of claim 7, wherein the lithium composite oxide obtained in (d) comprises primary particles and a secondary particle formed by aggregating the primary particles.

21. The method of claim 20, wherein the average particle diameter of the primary particles is 0.1 to 5 μm.

22. The method of claim 7, further comprising:
(e) preparing a mixture by mixing at least one selected from at least one sub-raw material including an element selected from Mn, Co, Al, B, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd and Cu and a lithium-containing raw materials with the lithium composite oxide obtained in (d), and thermally treating the mixture.

23. The method of claim 22, wherein the sub-raw material is provided as at least one type selected from a sulfate, a carbonate, a nitrate, an acetate, a chloride, a hydroxide, and an oxide.

24. The method of claim 22, wherein an oxide represented by Formula 3 below is generated on at least a part of the surface of the lithium composite oxide through the thermal treatment in (e),

$$[\text{Formula 3}] \qquad Li_aA_bO_c$$

(Here,

A is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Ce, Gd, and Nd,
0≤a≤10, 0<b≤8, and 2≤c≤13.)

FIG. 1

FIG. 2

FIG. 3

FIG. 4

KETI    SEI  15.0kV  X6,000  WD 10.0mm    KETI    SEI  15.0kV  X20,000  WD 10.0mm

<table>
<tr><td colspan="2" style="text-align:center"><b>INTERNATIONAL SEARCH REPORT</b></td><td>International application No.<br><br><b>PCT/KR2021/011582</b></td></tr>
</table>

**A.    CLASSIFICATION OF SUBJECT MATTER**

**H01M 4/525**(2010.01)i; **H01M 4/505**(2010.01)i; **H01M 10/54**(2006.01)i; **H01M 4/36**(2006.01)i; **H01M 4/62**(2006.01)i; **C01G 53/00**(2006.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 4/525(2010.01); B01J 6/00(2006.01); C01G 23/04(2006.01); H01M 10/052(2010.01); H01M 4/139(2010.01); H01M 4/36(2006.01); H01M 4/50(2010.01); H01M 4/52(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐-양극 활물질(waste positive active material), 슬러리(slurry), 분쇄(pulverization), 분무 건조(spray drying), 서브 원료 물질(supplementary material), 점도(viscosity), 바인더(binder), 강도(hardness), 리튬 이차전지(lithium secondary battery)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2017-0033787 A (ECOPRO BM CO., LTD.) 27 March 2017 (2017-03-27)<br>    See paragraphs [0010]-[0047] and [0052]-[0058]. | 1-4,6-9,13,14,16,18-24 |
| Y | | 5,10-12,15,17 |
| Y | JP 2009-117241 A (MITSUBISHI CHEMICALS CORP.) 28 May 2009 (2009-05-28)<br>    See paragraphs [0030]-[0036], [0096], [0111] and [0112]. | 5,15,17 |
| Y | JP 6601500 B2 (HITACHI METALS LTD.) 06 November 2019 (2019-11-06)<br>    See paragraphs [0001], [0044]-[0051] and [0084]. | 5,15,17 |
| Y | KR 10-2014-0137720 A (POSCO ES MATERIALS CO., LTD.) 03 December 2014 (2014-12-03)<br>    See paragraphs [0006]-[0027]. | 10-12 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 December 2021** | **14 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/011582** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0129594 A (LG CHEM, LTD.) 20 November 2019 (2019-11-20)<br>See entire document. | 1-24 |

Form PCT/ISA/210 (second sheet) (July 2019)

# EP 4 243 121 A1

<table>
<tr><td colspan="2" align="center">INTERNATIONAL SEARCH REPORT<br>Information on patent family members</td><td colspan="2">International application No.<br><br>**PCT/KR2021/011582**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>KR 10-2017-0033787 A</td><td>27 March 2017</td><td>KR 10-1929961 B1</td><td>18 December 2018</td></tr>
<tr><td>JP 2009-117241 A</td><td>28 May 2009</td><td>JP 5343347 B2</td><td>13 November 2013</td></tr>
<tr><td>JP 6601500 B2</td><td>06 November 2019</td><td>WO 2017-057078 A1</td><td>06 April 2017</td></tr>
<tr><td>KR 10-2014-0137720 A</td><td>03 December 2014</td><td>CA 2913121 A1<br>CA 2913121 C<br>CN 105531231 A<br>CN 105531231 B<br>EP 3000787 A1<br>EP 3000787 B1<br>JP 2016-523797 A<br>JP 6204576 B2<br>KR 10-1796233 B1<br>US 2016-0079594 A1<br>WO 2014-189209 A1</td><td>27 November 2014<br>20 February 2018<br>27 April 2016<br>16 February 2018<br>30 March 2016<br>12 February 2020<br>12 August 2016<br>27 September 2017<br>01 December 2017<br>17 March 2016<br>27 November 2014</td></tr>
<tr><td>KR 10-2019-0129594 A</td><td>20 November 2019</td><td>CN 111512492 A<br>EP 3709433 A1<br>KR 10-2227311 B1<br>US 2021-0083336 A1<br>WO 2019-216646 A1</td><td>07 August 2020<br>16 September 2020<br>15 March 2021<br>18 March 2021<br>14 November 2019</td></tr>
</table>

Form PCT/ISA/210 (patent family annex) (July 2019)